# EUROPEAN PATENT SPECIFICATION

(11) **EP 3 364 258 B1**
(45) Date of publication and mention of the grant of the patent: **25.12.2019**
(21) Application number: 17202066.1
(22) Date of filing: 16.11.2017
(51) Int. Cl.: G05B 19/042

(54) **CONTROL SYSTEM**
STEUERUNGSSYSTEM
SYSTÈME DE COMMANDE

(30) Priority: 21.02.2017 JP 2017030379
(43) Date of publication of application: 22.08.2018
(73) Proprietor: Omron Corporation, Kyoto-shi, Kyoto 600-8530 (JP)
(72) Inventor: TAMURA, Yoshihide, Kyoto-shi, Kyoto 600-8530 (JP)
(74) Representative: Becker Kurig Straus

(56) References cited:
- US-A1- 2007 156 715
- US-A1- 2016 091 903

## Description

### BACKGROUND

### Technical Field

The disclosure relates to a control system having a standard function of performing control regarding an operation of an industrial device and a safety function of performing control regarding safety management of the device.

### Description of Related Art

In a control system that controls an industrial device, one or a plurality of controllers (programmable logic controllers (PLCs)) that perform control of input and output of a robot or other industrial devices (hereinafter also simply referred to as devices) deployed in a factory, and the devices of which the operation is controlled by the controllers are connected to a network of a control system. The controller and the device perform transmission and reception of data by performing communication over the network of the control system, and function as a production facility.

The controller is configured by combining a plurality of elements such as a CPU that executes a calculation on the basis of a control program, an input part that is connected to an input device such as a sensor or a switch and acquires an input signal from the input device, an output part that is connected to an output device such as an actuator or a relay and transmits an output signal to the output device, a communication part that performs transmission and reception of data to and from other devices connected to the network, and a power supply part that supplies power to each part.

At present, in order to deal with safety management, a control system of an industrial device may include a safety function of performing control regarding safety management of the device, in addition to a standard function (non-safety function) of performing control regarding an operation of the device. In such a control system, a standard operation of the device is controlled using the standard function of the control system, and when any danger is detected, control regarding safety management such as emergency stop of the device is performed using the safety function independent of the standard function. Here, the safety function includes, for example, ensuring safety of a worker, for example, by reliably stopping an operation of the device when an emergency stop switch is pressed or a sensor such as a light curtain detects a person's entry.

This type of control system includes a safety controller, a safety drive, a safety input unit and so on conforming to a safety standard for realizing a safety function, in addition to a standard controller for realizing a standard function, and is used with, for example, various machine tools or robots with arms. The safety controller ensures high safety and reliability in control by including a self-diagnosis function of a safety aspect in addition to a logic calculation function and an input and output control function similar to a general controller (PLC). Examples of the above safety standard can include an IEC standard and an EN standard.

In the control system described above, it is necessary to respectively set a parameter regarding the standard function and a parameter regarding the safety function in order to smoothly operate the safety function in addition to the standard function, but it is generally necessary to independently set and separately manage the parameter regarding the standard function and the parameter regarding the safety function.

For example, a unit can be set for each drive shaft in some cases in order to set a target position or the like of a drive shaft (motor shaft) in the device in a user-friendly unit system. In this case, since the standard controller performs control of an operation of each drive shaft and the safety controller performs operation monitoring for safety of the drive shaft, the same unit setting is also required on the safety controller side. On the other hand, a setting tool is separate on the standard controller side and the safety controller side, and it is necessary to individually perform a unit setting for both of the controllers. Therefore, setting work is complicated and difficult to understand in some cases. Further, consistency of settings is not necessarily secured between the standard controller side and the safety controller side.

### [Prior Art Document]

### [Patent document]

[Patent Document 1] Japanese Patent No. 4336985
US 2016/091903 A1 discloses an integrating system incorporating a programmable logic module, input/output (I/O) modules connected to the programmable logic module, and safety device modules connected to the programmable logic module. The modules are connected with one another with connectors on each module. The modules talk to each other via a common communication protocol carried by wires in the connectors. The programmable logic module monitors and/or controls signals on input and output terminals of the I/O modules that are connected to the actuators and sensors in controlled equipment.

US 2007/156715 A1 discloses a method and apparatus for tagged property files for system configurations. A method includes receiving a property file for a configuration, the file including a set of properties. Each property has a tag to hold an attribute regarding the property. A tag is accessed to obtain an attribute. A value of an element of the configuration is resolved, with the resolution of the value of the element being based at least in part on the attribute.

### SUMMARY

The disclosure has been made to provide a technology capable of setting a setting item regarding a standard function and a setting item regarding a safety function more easily or ensuring consistency of both of the setting items more easily in a control system of an industrial device.

The present invention is provided by appended claim 1. The disclosure for solving the above problem is a control system that controls a industrial device, including: a standard functional part that performs control of an operation of the device; a safety functional part that performs control for managing safety of the device; a standard function setting part that performs a setting regarding control of the standard functional part; and a safety function setting part that performs a setting regarding control of the safety functional part, wherein, when a value of a first setting item is set in one of the standard function setting part and the safety function setting part, a second setting item related to the first setting item is automatically set to predetermined content corresponding to the content of the first setting item in the other of the standard function setting part and the safety function setting part.

Accordingly, when the user sets the first setting item in one of the standard function setting part and the safety function setting part, the second setting item related to the first setting item is automatically set to predetermined content corresponding to the content of the first setting item in the other of the standard function setting part and the safety function setting part. Therefore, it becomes possible for the user to more easily set the setting items in the standard function setting part and the safety function setting part. Further, impairment of a function or safety of the entire control system due to the user performing only a setting of the first setting item in one of the standard function setting part and the safety function setting part, and a setting of the second setting item being not performed in the other of the standard function setting part and the safety function setting part can be suppressed. The content of the setting item above includes items attached to the setting parameters, such as a unit system, in addition to the values of the setting parameters themselves.

### BRIEF DESCRIPTION OF THE DRAWINGS

Fig. 1 is a block diagram illustrating an overview of a control system according to an embodiment of the disclosure.
Fig. 2 is a block diagram illustrating an overview of a setting tool and a related configuration according to an embodiment of the disclosure.
Fig. 3 is a flowchart illustrating an example of processing content in a setting tool according to Embodiment 1 of the disclosure.
Fig. 4(a) and Fig. 4(b) are diagrams illustrating an example of a screen display in the setting tool according to Embodiment 1 of the disclosure.
Fig. 5 is a flowchart illustrating an example of processing content in a setting tool according to Embodiment 2 of the disclosure.
Fig. 6(a) and Fig. 6(b) are diagrams illustrating an example of a screen display in the setting tool according to Embodiment 2 of the disclosure.

### DETAILED DESCRIPTION OF THE EMBODIMENTS

In one or some of exemplary embodiments of the disclosure, when a value of the first setting item is set in one of the standard function setting part and the safety function setting part, a user may be notified that the second setting item will be set to predetermined content corresponding to content of the first setting item, and when consent of the user is obtained in response to the notification, the second setting item related to the first setting item may be automatically set to predetermined content corresponding to the content of the first setting item in the other of the standard function setting part and the safety function setting part.

Accordingly, when the value of the first setting item is set in one of the standard function setting part and the safety function setting part, the user is first notified that the second setting item related to the first setting item is set to the predetermined content corresponding to the content of the first setting item in the other of the standard function setting part and the safety function setting part. When the consent of the user is obtained, the second setting item is automatically set to predetermined content corresponding to the content of the first setting item.

As a result, after the content of the first setting item is set by the user in one of the standard function setting part and the safety function setting part and before the second setting item is automatically set in the other of the standard function setting part and the safety function setting part, it is possible to confirm the user's intention. Therefore, it is possible to prevent the content of the second setting item from being changed due to a defect.

In one or some of exemplary embodiments of the disclosure, in the standard function setting part and/or the safety function setting part, the first setting item and/or the second setting item may be displayed to be identifiable from other setting items.

Accordingly, the user can more easily recognize that there is a setting item to be set to the corresponding content in the other of the standard function setting part and the safety function setting part when viewing the display of the setting item in one of the standard function setting part and the safety function setting part. As a result, when the user sets the content of the first setting item, the user can confirm that the second setting item is automatically set to the predetermined content more reliably, or the user can be motivated to set the second setting item to the predetermined content more reliably.

In one or some of exemplary embodiments of the disclosure, when the content of the first setting item is set in one of the standard function setting part and the safety function setting part, the user may be requested to release a predetermined security lock, and when the user has released the predetermined security lock, the second setting item may be automatically set to predetermined content corresponding to the content of the first setting item in the other of the standard function setting part and the safety function setting part.

Accordingly, after the content of the first setting item is set by the user in one of the standard function setting part and the safety function setting part and before the second setting item is automatically set in the other of the standard function setting part and the safety function setting part, it is possible to confirm that the user is an participant. Thus, it is possible to prevent the content of the second setting item from being changed due to a defect or malice from an outsider.

In one or some of exemplary embodiments of the disclosure, when the content of the first setting item is set in one of the standard function setting part and the safety function setting part, the user may be notified of the second setting item.

Accordingly, when the content of the first setting item is set in one of the standard function setting part and the safety function setting part and reflected in the content of the second setting item, the user can more reliably confirm what the second setting item in the other of the standard function setting part and the safety function setting part is. As a result, it is possible to cause the user to be conscious of a range of influence of the change of the first setting item on a safety function, and to suppress an unnecessary setting change.

In one or some of exemplary embodiments of the disclosure, in the standard function setting part, a device of which the safety is managed by the safety functional part may be displayed in an identifiable manner. Then, in the standard function setting part, the user can recognize at a glance a device on which the safety functional part performs control for managing safety.

In one or some of exemplary embodiments of the disclosure, when the value of the first setting item is downloaded from one of the standard function setting part and the safety function setting part to the standard functional part or the safety functional part and set, a notification may be performed in the other of the standard function setting part and the safety function setting part to indicate that the content of the second setting item is to be downloaded from the other of the standard function setting part and the safety function setting part to the standard functional part or the safety functional part.

Accordingly, when the content of the first setting item is downloaded from one of the standard function setting part and the safety function setting part to the standard functional part or the safety functional part and set, the user can more reliably recognize, in the other of the standard function setting part and the safety function setting part, that the content of the second setting item is to be downloaded from the other of the standard function setting part and the safety function setting part to the standard functional part or the safety functional part.

The means for solving the above-described problem can be used in appropriate combinations.

According to the disclosure, it is possible to set the setting item regarding the standard function and the setting item regarding the safety function more easily or ensure consistency of both of the setting items more easily in the control system of the industrial device.

### <Embodiment 1>

Hereinafter, embodiments of the disclosure will be described with reference to the drawings. The following example is an aspect of the disclosure and does not limit the technical scope of the disclosure.

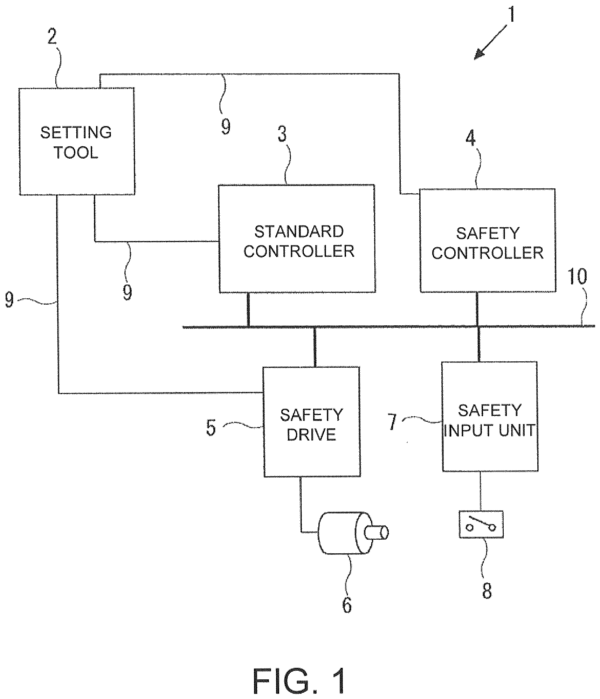

Fig. 1 is a block diagram illustrating an overview of a control system 1 in this embodiment. As illustrated in Fig. 1, various devices such as a standard controller 3, a safety controller 4, a safety drive 5, and a safety input unit 7 are connected via a communication path 10, and a safety network system in which transmission and reception of data are performed between the respective devices is formed. A drive shaft 6 of a device of which safety is to be managed in the control system 1 is connected to the safety drive 5. A safety input device 8 such as an emergency stop switch or a light curtain is connected to the safety input unit 7. A setting tool 2 is connected to the standard controller 3, the safety controller 4, and the safety drive 5 via a communication path 9. The communication paths 9 and 10 may be wired/wireless dedicated lines or may be paths that use an Internet line or the like.

Here, the setting tool 2 has a function of setting parameters as setting items for performing control of various devices in the control system 1. A setting of the parameters and creation of a user program in the standard controller 3, a setting of the parameters and creation of a user program in the safety controller 4, a setting of parameters in the safety drive 5, and the like are performed. In the setting tool 2, each parameter is set using a scheme such as direct input by a user or data upload from the system. Further, each parameter includes a parameter that is common or related among the standard controller 3, the safety controller 4, and the safety drive 5.

The standard controller 3 transmits a command signal to the safety drive 5 via the communication path 10 and controls an operation of the drive shaft 6 for various devices. Further, the safety controller 4 performs communication regarding control for safety management with the safety input unit 7 and the safety drive 5 via the communication path 10. Further, the safety controller 4 controls a function of emergency stop and monitoring of the safety drive 5 by calculating safety input data from the safety input unit 7 using a safety program and outputting a result thereof to the safety drive 5.

The safety input unit 7 is connected to the safety input device 8, is also connected to the safety controller 4 via the communication path 10, and transfers input data regarding safety from the safety input device 8 to the safety controller 4. As described above, the safety drive 5 is a driver that controls the drive shaft 6 of the device. The safety drive 5 controls the operation of the drive shaft 6 of the device on the basis of the command signal from the standard controller 3, monitors the operation of the drive shaft 6 of the device on the basis of the command signal from the safety controller 4, and performs measures such as emergency stop, if necessary.

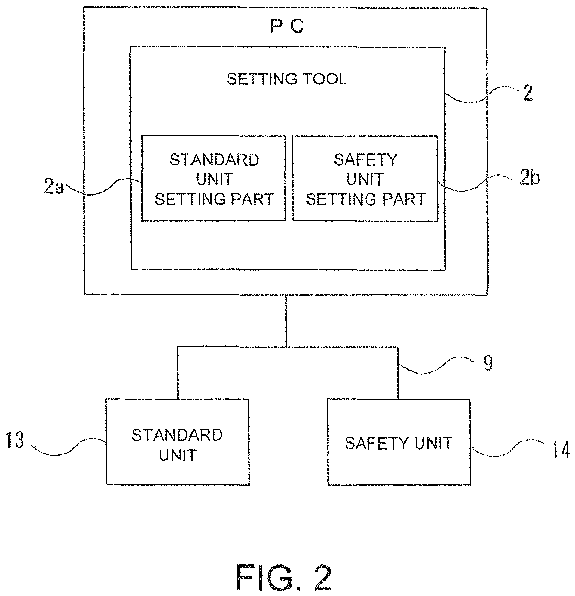

Fig. 2 illustrates a block diagram of the setting tool 2 and a related configuration. As illustrated in Fig. 2, the setting tool 2 is basically realized by a personal computer connected to the communication path 9. More specifically, the setting tool 2 has a configuration (not illustrated) provided in an ordinary personal computer, such as a display part such as a monitor, an input part such as a keyboard, a mouse, or another pointing device, a processing part that performs predetermined signal processing on the basis of information given from the input part, and a communication interface part connected to the communication path 9. Further, the setting tool 2 includes a standard unit setting part 2a, and a safety unit setting part 2b.

The standard unit setting part 2a can perform a setting regarding an operation of a standard unit 13 to be described below. More specifically, the standard unit setting part 2a has, for example, a function of selecting and inputting numerical values themselves, units, or the like of various parameters regarding an operation or performing programming regarding the operation. Some of the parameters set here have the same content as those in the safety unit setting part 2b to be described below, and when the setting in the standard unit setting part 2a is changed, changed content is transmitted to the safety unit setting part 2b and the setting in the safety unit setting part 2b is also automatically changed.

The safety unit setting part 2b can perform a setting regarding an operation of a safety unit 14 to be described below. More specifically, the safety unit setting part 2b has, for example, a function of selecting and inputting numerical values themselves, units, or the like of various parameters regarding safety control or performing programming regarding the safety control. Some of the parameters set here have the same content as those in the standard unit setting part 2a, and when the setting in the safety unit setting part 2b is changed, changed content is transmitted to the standard unit setting part 2a and the setting in the standard unit setting part 2a is also automatically changed.

The standard unit 13 in Fig. 2 means an entire device that performs control of the operation of the drive shaft 6 of the device, and is a unit including the standard controller 3 and the safety drive 5. Further, the safety unit 14 means an entire device for managing the safety of the device, and is a unit including the safety controller 4, the safety drive 5, the safety input unit 7, and the safety input device 8. Here, the standard unit setting part 2a corresponds to a standard function setting part in this embodiment. The safety unit setting part 2b corresponds to a safety function setting part in this embodiment. The standard unit 13 corresponds to a standard functional part in this embodiment. The safety unit 14 corresponds to a safety functional part in this embodiment.

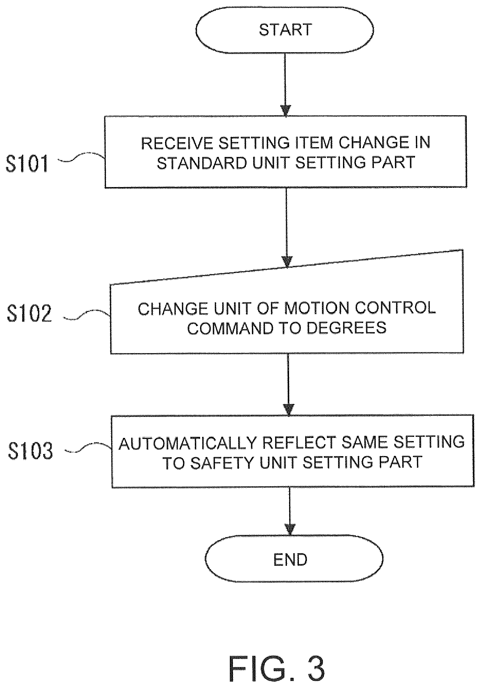

Next, an example of process in the setting tool 2 in this embodiment will be described. Fig. 3 is a flowchart regarding a process in which the unit of the motion control command and the unit of the monitor numerical value for safety monitoring when an operation thereof is performed are set to the same unit (degrees) for the drive shaft of a control target in the setting tool 2.

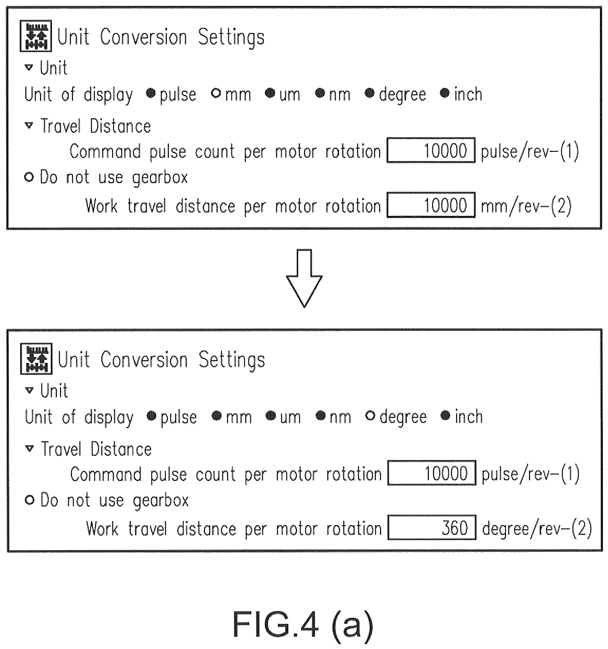

As illustrated in Fig. 3, as the process in the setting tool 2, first, the setting tool 2 enters a reception state of a change of the parameter (setting item) in S101. In this state, a user changes a unit of a motion control command from mm to degrees in S102. Fig. 4(a) illustrates an example of a display screen in the setting tool 2 when the change is received in S101 and a display screen in the setting tool 2 when the setting is changed in S102. When the process of S102 ends, the process proceeds to S103.

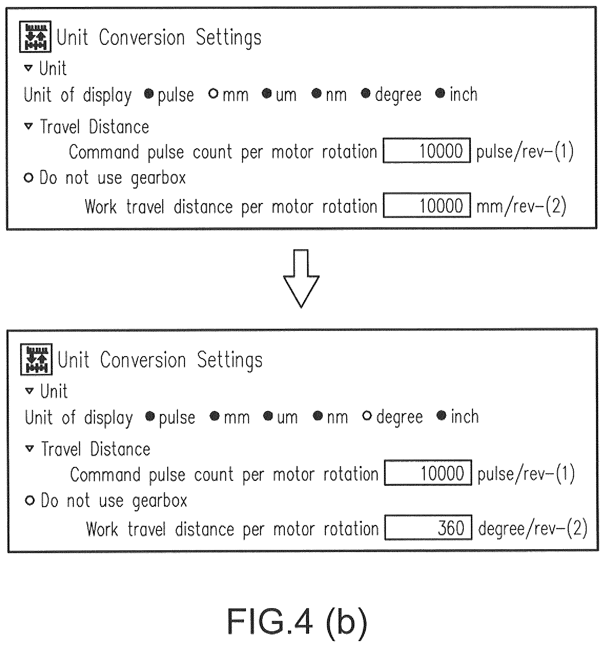

In S103, the same setting is automatically reflected in the safety unit setting part 2b. When the process of S103 ends, this routine temporarily ends. Fig. 4(b) illustrates a display of the safety unit setting part 2b before and after this setting is reflected in the safety unit setting part 2b.

As described above, in this embodiment, when the user changes the unit of the motion control command in the standard unit setting part 2a, the content is automatically reflected in the setting in the safety unit setting part 2b. Accordingly, it is possible to automatically ensure consistency between the setting content of the parameters regarding the standard controller 3 of the standard unit 13 and the setting content of the parameters regarding the safety controller 4 of the safety unit 14, and to prevent confusion of the user due to inconsistency between the setting content of the parameters.

The unit of the motion control command set for the standard unit setting part 2a corresponds to a first setting item in this embodiment. Further, a unit of a monitor numerical value at the time of safety monitoring reflected in the safety unit setting part 2b corresponds to a second setting item in this embodiment. The unit degrees corresponds to content of the first setting item and predetermined content of the second setting item in this embodiment.

### <Embodiment 2>

Next, Embodiment 2 in the disclosure will be described. An example in which, when the user changes the unit of the motion control command in the standard unit setting part 2a, content to be reflected in the setting in the safety unit setting part 2b is not automatically reflected as it is, but a notification is performed using the setting tool 2 to indicate that the same content will be reflected in the setting in the safety unit setting part 2b (which is also a setting in the safety unit 14) will be described in this embodiment.

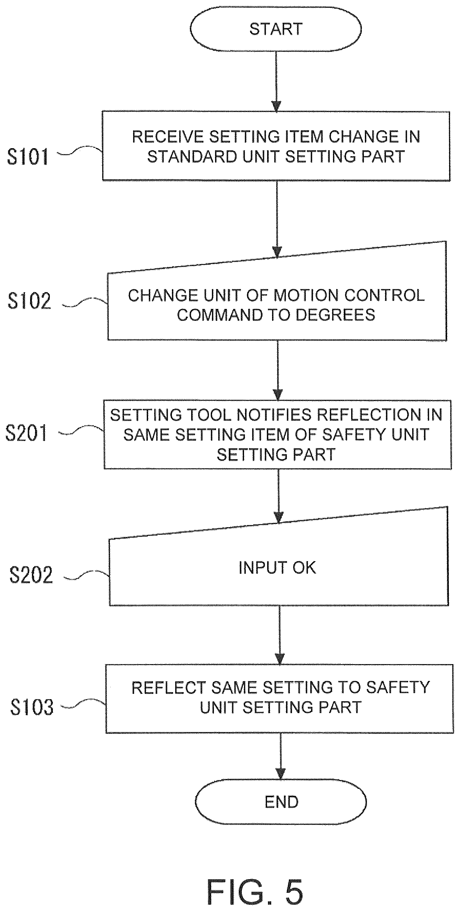

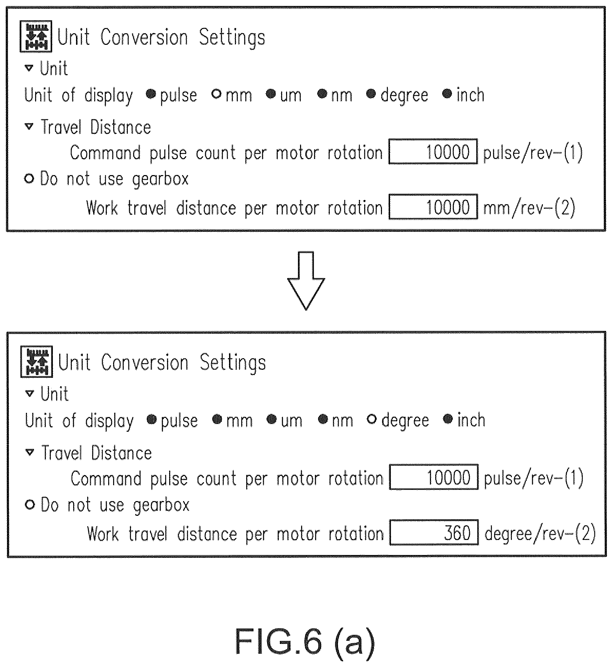

Fig. 5 is a flowchart regarding a process in which the unit of the motion control command and the unit of the monitor numerical value for safety monitoring of when an operation thereof is performed are set to the same unit (degrees) for the drive shaft of a control target in the setting tool 2 of this embodiment. In this embodiment, when the process is started, the setting tool 2 enters a reception state of a change of the parameter (setting item) in S101. In this state, the user changes the unit of the motion control command from mm to degrees in S102. Fig. 6(a) illustrates an example of a display screen in the setting tool 2 when the change is received in S101 and a display screen in the setting tool 2 when the setting is changed in S102. When the process of S102 ends, the process proceeds to S201.

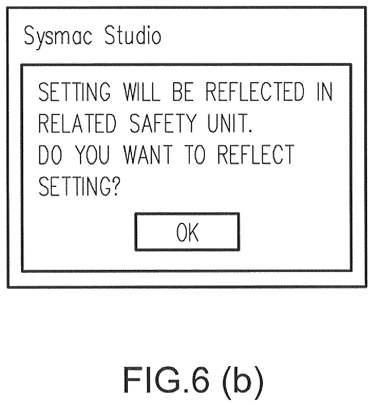

In S201, the setting tool 2 notifies the user that the change will be reflected in the same setting item of the safety unit setting part 2b. A display on a display device of the setting tool 2 in this case is illustrated in Fig. 6(b). When the process of S201 ends, the process proceeds to S202.

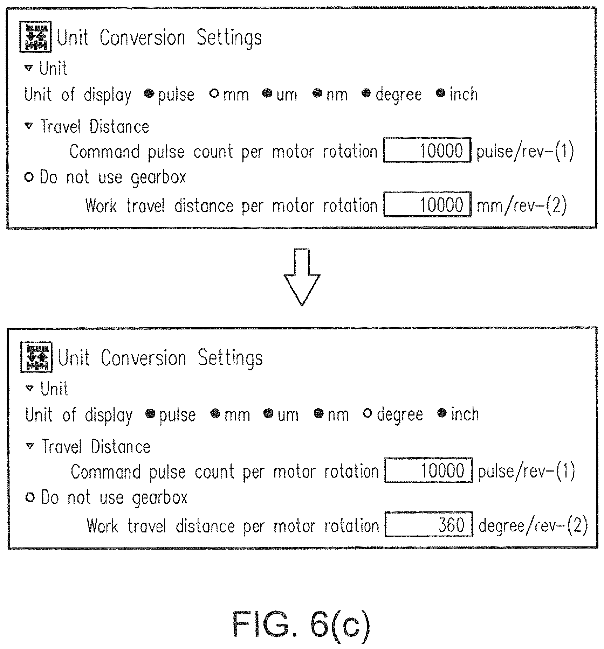

In S202, the user clicks an OK button. When the process of S202 ends, the process proceeds to S103. In S103, the same setting is reflected in the safety unit setting part 2b. When the process of S103 ends, this routine temporarily ends. Fig. 6(c) illustrates a display of the safety unit setting part 2b before and after this setting is reflected in the safety unit setting part 2b.

As described above, in this embodiment, when the user changes the unit of the motion control command in the standard unit setting part 2a, a notification is performed to indicate that the change will be reflected in the setting of the safety unit setting part 2b (the safety unit 14 on an actual display), and the change can be reflected in the setting of the parameter in the safety unit setting part 2b once the user expresses his or her intention by clicking OK. Accordingly, it is possible to ensure consistency between the setting content of the parameters regarding the standard controller 3 of the standard unit 13 and the setting content of the parameters regarding the safety controller 4 of the safety unit 14 more reliably, and to prevent confusion of the user due to inconsistency between setting content of the parameters.

The unit of the motion control command set for the standard unit setting part 2a corresponds to a first setting item in this embodiment. Further, a unit of a monitor numerical value at the time of safety monitoring reflected in the safety unit setting part 2b corresponds to a second setting item in this embodiment. The unit degrees corresponds to content of the first setting item and predetermined content of the second setting item in this embodiment.

In Embodiments 1 and 2, in a display of the standard unit setting part 2a, the setting items in which the content of the setting change is to be reflected in the setting in the safety unit setting part 2b may be displayed so that the setting items are distinguishable from setting items in which the content of setting need not be reflected. For example, a background color or text itself of the setting items is differentiated in color from the surroundings. Accordingly, the user can more strongly be made aware of the fact that the changed content of the setting items is reflected in the setting content of the safety unit setting part 2b.

In Embodiments 1 and 2, when the user changes the unit of the motion control command in the standard unit setting part 2a, a range of parameters in the safety unit setting part 2b influenced by the change may be displayed. Accordingly, it is possible to cause the user to be conscious of an influence range of the setting change, and to suppress an unnecessary change.

Further, in Embodiments 1 and 2, before the user changes the unit of the motion control command in the standard unit setting part 2a, or after the user changes the unit of the motion control command in the standard unit setting part 2a and before the change is reflected in the setting in the safety unit setting part 2b, an input of a password may be requested. Thus, it is possible to prevent the content of the first setting item and the content of the second setting item from being changed due to a defect or malice from an outsider.

Further, in Embodiments 1 and 2, while the example in which the user manually changes the content of the setting items of the standard unit setting part 2a has been described, it is obvious that the disclosure may be applied to a case in which the content of setting items is uploaded from a system.

Further, in Embodiments 1 and 2, the example in which, when the user changes the unit of the motion control command in the standard unit setting part 2a, the content of the change is automatically reflected in the setting of the unit of the monitor numerical value when safety monitoring is performed in the safety unit setting part 2b has been described. However, in the disclosure, in a case in which the user changes the unit of the monitor numerical value when safety monitoring is performed in the safety unit setting part 2b, the content of the change may be automatically reflected in the setting of the unit of the motion control command in the standard unit setting part 2a.

In Embodiments 1 and 2, the setting item includes a numerical value itself of the parameter, and an item associated with the numerical value of the parameter. For example, although the unit of a target value of the motion control command is changed in the embodiments, the disclosure may be applied to a change of the target value itself of the motion control command. Further, although the case in which the setting item is common to the standard unit setting part 2a and the safety unit setting part 2b has been described in the embodiments, the setting item is not necessarily common, and the disclosure can be applied to a case in which mutual relevance is maintained and the other setting item is uniquely determined when one setting item is determined.

### [Explanation of sign]

1: control system, 2: setting tool, 2a: standard unit setting part (standard function setting part), 2b: safety unit setting part (safety function setting part), 3: standard controller (standard functional part), 4: safety controller (safety functional part), 5: safety drive, 6: drive shaft (device), 7: safety input unit, 8: safety input device, 9: communication path, 10: communication path, 13: standard unit, 14: safety unit, S101-S103, S201, S202: step

## Claims

1. A control system (1), configured to control an industrial device (6), comprising:
a standard functional part (3) configured to perform control of an operation of the industrial device (6);
a safety functional part (4) configured to perform control for managing safety of the industrial device (6);
a standard function setting part (2a) configured to perform a setting of a standard functional part setting item regarding control of the standard functional part (3); and
a safety function setting part (2b) configured to perform a setting of a safety functional part setting item regarding control of the safety functional part (4),
the control system (1) being **characterized in that**, when a value of a first setting item is set in one of the standard function setting part (2a) and the safety function setting part (2b), a second setting item related to the first setting item is automatically set to a predetermined content corresponding to the content of the first setting item in the other of the standard function setting part (2a) and the safety function setting part (2b).

2. The control system (1) according to claim 1,
wherein, when the value of the first setting item is set in one of the standard function setting part (2a) and the safety function setting part (2b), the control system (1) is configured to notify a user that the second setting item will be set to the predetermined content corresponding to the content of the first setting item, and when consent of the user is obtained in response to the notification, the second setting item related to the first setting item is configured to be automatically set to the predetermined content corresponding to the content of the first setting item in the other of the standard function setting part (2a) and the safety function setting part (2b).

3. The control system (1) according to claim 1 or 2, wherein, in the standard function setting part (2a) and/or the safety function setting part (2b), the first setting item and/or the second setting item is displayed to a user in order to be identified from other setting items.

4. The control system (1) according to any one of claims 1 to 3, wherein release of a predetermined security lock is requested before the automatic setting.

5. The control system (1) according to any one of claims 1 to 4, wherein, when the content of the first setting item is set in one of the standard function setting part (2a) and the safety function setting part (2b), the user is notified of the second setting item.

6. The control system (1) according to any one of claims 1 to 5, wherein, in the standard function setting part (2a), the industrial device (6) of which the safety is managed by the safety functional part (4) is displayed to a user in order to be identified from other devices.

## Patentansprüche

1. Steuerungssystem (1), das konfiguriert ist, um eine industrielle Vorrichtung (6) zu steuern, umfassend:
ein Standardfunktionsteil (3), das konfiguriert ist, um Steuerung eines Betriebs der industriellen Vorrichtung (6) durchzuführen;
ein Sicherheitsfunktionsteil (4), das konfiguriert ist, um Steuerung durchzuführen, um Sicherheit der industriellen Vorrichtung (6) zu verwalten;
ein Standardfunktionseinstellteil (2a), das konfiguriert ist, um eine Einstellung eines Standardfunktionsteil-Einstellgegenstands bezüglich Steuerung des Standardfunktionsteils (3) durchzuführen; und
ein Sicherheitsfunktionseinstellteil (2b), das konfiguriert ist, um eine Einstellung eines Sicherheitsfunktion-Einstellgegenstands bezüglich Steuerung des Sicherheitsfunktionsteils (4) durchzuführen,
wobei das Steuerungssystem (1) **dadurch gekennzeichnet ist, dass**, wenn ein Wert eines ersten Einstellgegenstands in einem des Standardfunktionseinstellteils (2a) und des Sicherheitsfunktionseinstellteils (2b) eingestellt wird, ein zweiter Einstellgegenstand, der sich auf den ersten Einstellgegenstand bezieht, automatisch auf
einen vorbestimmten Inhalt eingestellt wird, der dem Inhalt des ersten Einstellgegenstandes in dem anderen von dem Standardfunktionseinstellteil (2a) und dem Sicherheitsfunktionseinstellteil (2b) entspricht.

2. Steuerungssystem (1) gemäß Anspruch 1,
wobei, wenn der Wert des ersten Einstellgegenstandes in einem des Standardfunktionseinstellteils (2a) und des Sicherheitsfunktionseinstellteils (2b) eingestellt ist, das Steuerungssystem (1) konfiguriert ist, um einen Benutzer zu informieren, dass der zweite Einstellgegenstand auf den
vorbestimmten
Inhalt entsprechend dem
Inhalt des ersten Einstellgegenstands eingestellt wird, und wenn die Zustimmung des Benutzers als Reaktion auf die Benachrichtigung eingeholt ist, der zweite Einstellgegenstand in Bezug auf den ersten Einstellgegenstand konfiguriert ist, um automatisch auf den
vorbestimmten Inhalt,
entsprechend dem Inhalt des ersten Einstellgegenstands in dem anderen von dem Standardfunktionseinstellteil (2a) und dem Sicherheitsfunktionseinstellteil (2b) eingestellt zu werden.

3. Steuerungssystem (1) gemäß Anspruch 1 oder 2, wobei in dem Standardfunktionseinstellteil (2a) und/oder dem Sicherheitsfunktionseinstellteil (2b) der erste Einstellgegenstand und/oder der zweite Einstellgegenstand einem Benutzer angezeigt wird, um von anderen
Einstellgegenständen identifiziert zu werden.

4. Steuerungssystem (1) gemäß irgendeinem der Ansprüche 1 bis 3, wobei Freigabe eines vorbestimmten Sicherheitsschlosses vor der automatischen Einstellung angefordert wird.

5. Steuerungssystem (1) gemäß irgendeinem der Ansprüche 1 bis 4, wobei, wenn der Inhalt des ersten Einstellgegenstandes in einem von dem Standardfunktionseinstellteil (2a) und dem Sicherheitsfunktionseinstellteil (2b) eingestellt ist, der Benutzer über den zweiten Einstellgegenstand informiert wird.

6. Steuerungssystem (1) gemäß irgendeinem der Ansprüche 1 bis 5, wobei in dem Standardfunktionseinstellteil (2a) die industrielle Vorrichtung (6), von der die Sicherheit durch das Sicherheitsfunktionsteil (4) verwaltet wird, einem Benutzer angezeigt wird,
um von anderen Vorrichtungen identifiziert zu werden.

## Revendications

1. Système de contrôle (1) configuré pour contrôler un dispositif industriel (6), comprenant :
une partie fonctionnelle standard (3) configurée pour effectuer un contrôle d'un fonctionnement du dispositif industriel (6) ;
une partie fonctionnelle de sécurité (4) configurée pour effectuer un contrôle pour gérer la sécurité du dispositif industriel (6) ;
une partie de réglage de fonction standard (2a) configurée pour effectuer un réglage d'un élément de réglage de partie fonctionnelle standard concernant le contrôle de la partie fonctionnelle standard (3) ; et une partie de réglage de fonction de sécurité (2b) configurée pour effectuer un réglage d'un élément de réglage de partie fonctionnelle de sécurité concernant le contrôle de la partie fonctionnelle de sécurité (4),
le système de contrôle (1) **se caractérisant en ce que**, lorsqu'une valeur d'un premier élément de réglage est réglée dans l'une parmi la partie de réglage de fonction standard (2a) et la partie de réglage de fonction de sécurité (2b), un deuxième élément de réglage associé au premier élément de réglage est automatiquement réglé à un contenu prédéterminé correspondant au contenu du premier élément de réglage dans l'autre parmi la partie de réglage de fonction standard (2a) et la partie de réglage de fonction de sécurité (2b).

2. Système de contrôle (1) selon la revendication 1, dans lequel, lorsque la valeur du premier élément de réglage est réglée dans l'une parmi la partie de réglage de fonction standard (2a) et la partie de réglage de fonction de sécurité (2b), le système de contrôle (1) est configuré pour signaler à un utilisateur que le deuxième élément de réglage va être réglé au contenu prédéterminé correspondant au contenu du premier élément de réglage, et lorsque le consentement de l'utilisateur est obtenu en réponse au signalement, le deuxième élément de réglage associé au premier élément de réglage est configuré pour être automatiquement réglé au contenu prédéterminé correspondant au contenu du premier élément de réglage dans l'autre parmi la partie de réglage de fonction standard (2a) et la partie de réglage de fonction de sécurité (2b).

3. Système de contrôle (1) selon la revendication 1 ou 2, dans lequel, dans la partie de réglage de fonction standard (2a) et/ou la partie de réglage de fonction de sécurité (2b), le premier élément de réglage et/ou le deuxième élément de réglage sont affichés pour un utilisateur afin d'être identifiés par rapport à d'autres éléments de réglage.

4. Système de contrôle (1) selon l'une quelconque des revendications 1 à 3, dans lequel la libération d'un verrou de sécurité prédéterminé est requise avant le réglage automatique.

5. Système de contrôle (1) selon l'une quelconque des revendications 1 à 4, dans lequel, lorsque le contenu du premier élément de réglage est réglé dans l'une parmi la partie de réglage de fonction standard (2a) et la partie de réglage de fonction de sécurité (2b), on signale à l'utilisateur le deuxième élément de réglage.

6. Système de contrôle (1) selon l'une quelconque des revendications 1 à 5, dans lequel, dans la partie de réglage de fonction standard (2a), le dispositif industriel (6) dont la sécurité est gérée par la partie fonctionnelle de sécurité (4) est affiché pour un utilisateur afin d'être identifié par rapport à d'autres dispositifs.
